# EUROPÄISCHE PATENTSCHRIFT

(11) **EP 2 183 127 B1**
(45) Veröffentlichungstag und Bekanntmachung des Hinweises auf die Patenterteilung: **06.01.2016**
(21) Anmeldenummer: 08773982.7
(22) Anmeldetag: 14.07.2008
(51) Int. Cl.: B60N 2/015, B60N 2/235, B60N 2/36, B60N 2/30

(54) **FAHRZEUGSITZ FÜR EIN KRAFTFAHRZEUG**
VEHICLE SEAT FOR A MOTOR VEHICLE
SIÈGE DE VÉHICULE POUR VÉHICULE AUTOMOBILE

(30) Priorität: 02.08.2007 DE 102007036600; 09.08.2007 DE 102007037714; 10.12.2007 DE 102007059641
(43) Veröffentlichungstag der Anmeldung: 12.05.2010
(73) Patentinhaber: Johnson Controls GmbH, 51399 Burscheid (DE)
(72) Erfinder: SCHMODDE, Hans, 71034 Böblingen (DE); JOSTEN, Stefan, 41569 Rommerskirchen (DE); WOOLSTON, Stuart, Glasgow G75 8TZ (GB); LEKAT, Peter, 50679 Köln-Seeberg (DE)
(74) Vertreter: Schwöbel, Thilo K.
(86) Internationale Anmeldenummer: PCT/EP2008/005727
(87) Internationale Veröffentlichungsnummer: WO 2009/015759

(56) Entgegenhaltungen:
- WO-A1-2004/060712
- US-A- 5 482 349
- US-A- 6 070 934

## Beschreibung

Die Erfindung betrifft einen Fahrzeugsitz bzw. eine Neigungsverstellvorrichtung für die Rückenlehne eines Kraftfahrzeugs.

Die Erfindung betrifft insbesondere einen Fahrzeugsitz mit den Merkmalen des Oberbegriffs von Anspruch 1. Ein derartiger Fahrzeugsitz ist aus der WO 2004/060712 A1 bekannt.

Fahrzeugsitze mit Neigungsverstellvorrichtungen für die Rückenlehne sind allgemein bekannt. Beispielsweise sind aus den Druckschriften US 5,482,349 A, EP 0 422 527 A1, DE 20 2006 004 326 U1, EP 1 048 510 B1, DE 199 54 687 A1, DE 100 54 428 A1, DE 94 02 767 U1, DE 28 48 268 C2, DE 102 44 695 B4, DE 10 2004 011 137 A1 und DE 698 06 472 T2 solche Vorrichtungen grundsätzlich bekannt.

Die bekannten Fahrzeugsitze sind jedoch hinsichtlich der Laderaumvergrößerung, bei der Bedienung zur Einstellung einer Laderaumvergrößerung und hinsichtlich des Gewichts des Fahrzeugsitzes nachteilig.

Aufgabe der vorliegenden Erfindung war daher einen Fahrzeugsitz zu schaffen, bei dem mit einfachen konstruktiven Mitteln des Fahrzeugsitzes und insbesondere bei geringem Gewicht des Fahrzeugsitzes eine Ladeposition der Rückenlehne derart einnehmbar ist, dass eine Vorverlagerung der Rückenlehne bei gleichzeitigem Anheben der Rückenlehne unter Kombination mit einer Einhandbedienung vorgesehen ist.

Die Aufgabe wird durch die Merkmale des Anspruchs 1 gelöst, im Einzelnen durch einen Fahrzeugsitz, insbesondere Rücksitzbank, mit einem Sitzteil, einem Lehnenteil und einem Beschlagteil, wobei das Lehnenteil und das Beschlagteil relativ zur Fahrzeugkarosserie um eine erste Drehachse schwenkbar vorgesehen ist und wobei die erste Drehachse unterhalb des Sitzteils oder hinter dem Lehnenteil angeordnet ist. Mit der Bezeichnung "unterhalb des Sitzteils" wird im Sinne der vorliegenden Erfindung insbesondere verstanden, dass die erste Drehachse deutlich unterhalb einer Ebene einer Sitzfläche des Sitzteils angeordnet ist, beispielsweise mehr als 100 mm unterhalb dieser Ebene der Sitzfläche in der Normalposition des Sitzteils, der sogenannten Designposition des Sitzteils. Durch Variation des Ortes der ersten Drehachse ist es erfindungsgemäß in vorteilhafter Weise konstruktiv einfach möglich, eine fast beliebige gewünschte Einstellung des Lehnenteils bei einer einfachen und mechanisch sehr stabil ausführbaren Verklappung bzw. Schwenkung des Lehnenteils und des Beschlagteils um die erste Drehachse um einen lediglich geringen Winkel zu erzielen. Insbesondere ist es erfindungsgemäß möglich, durch die Vorverlagerung des Ortes der ersten Drehachse zu bewirken, dass eine Verklappung des Beschlagteils zusammen mit dem Lehnenteil um beispielsweise 20° oder um beispielsweise 25° oder um beispielsweise 30° zu einer Anhebung des Lehnenteils über das Sitzteil derart führt, dass eine deutliche Vorverlagerung des Lehnenteils um beispielsweise 100 mm ermöglicht wird und so ein erheblicher Platzgewinn hinter dem Lehnenteil, d.h. in der Regel im Bereich eines Kofferraums bzw. Laderaums, möglich ist. Mit der Bezeichnung "hinter dem Lehnenteil" wird im Sinne der vorliegenden Erfindung insbesondere verstanden, dass die erste Drehachse deutlich hinter einer Ebene einer Sitzfläche oder Anlehnfläche des Lehnenteils angeordnet ist, beispielsweise mehr als 100 mm hinter dieser Ebene in der Normalposition des Lehnenteils, der sogenannten Designposition des Lehnenteils, wobei insbesondere eine Positionierung der ersten Drehachse nach schräg hinten oben gegenüber dem unteren Ende des Lehnenteils erfindungsgemäß alternativ zur Positionierung unterhalb des Sitzteils vorgesehen ist.

Erfindungsgemäß ist vorgesehen, dass das Lehnenteil relativ zum Beschlagteil um eine zweite Drehachse schwenkbar vorgesehen ist, wobei bevorzugt insbesondere zwischen dem Beschlagteil und dem Lehnenteil ein Neigungsverstellbeschlag vorgesehen ist, insbesondere ein Taumelverstellbeschlag und/oder ein Rastbeschlag. Hierdurch ist es vorteilhaft möglich, eine Komfortverstellung des Lehnenteils in einem Bereich um seine Designposition herum zu ermöglichen.

Gemäß der vorliegenden Erfindung ist weiterhin vorgesehen, dass die Dreheinstellung des Lehnenteils relativ zum Beschlagteil um die zweite Drehachse in einer dritten Position und in einer vierten Position vorgesehen ist, wobei die dritte Position einer Normalposition entspricht und wobei die vierte Position einer Klappposition entspricht. Hierdurch wird eine weitere Erhöhung der Flexibilität in der Nutzung des Fahrzeugsitzes bzw. des Fahrzeugs mit einem erfindungsgemäßen Fahrzeugsitz errecht.

Erfindungsgemäß ist weiterhin bevorzugt vorgesehen, dass die zweite Drehachse oberhalb der ersten Drehachse angeordnet ist, insbesondere im Bereich einer Ebene einer Sitzfläche des Sitzteils oder oberhalb einer Ebene einer Sitzfläche des Sitzteils. Hierdurch wird in vorteilhafter Weise den Komfortansprüchen eines Benutzers des Fahrzeugsitzes Rechnung getragen. Ferner kann durch eine solche Anordnung der zweiten Drehachse auch erreicht werden, dass bei einer Schwenkbewegung des Lehnenteils derart, dass dieses im Wesentlichen horizontal eingestellt ist, eine im wesentlichen ebene Fortsetzung des Laderaumbodens möglich wird.

Weiterhin ist es erfindungsgemäß bevorzugt, dass eine Dreheinstellung des Beschlagteils um die erste Drehachse in einer ersten Position und in einer zweiten Position relativ zur Fahrzeugkarosserie vorgesehen, wobei die erste Position einer Komfortposition entspricht und wobei die zweite Position einer Ladeposition entspricht. Durch die Möglichkeit der Einstellung der Ladeposition ist es so erfindungsgemäß vorteilhaft möglich eine erhebliche Vergrößerung des Laderaumvolumens zu erzielen.

Erfindungsgemäß ist weiterhin bevorzugt, wenn die Dreheinstellung des Beschlagteils um die erste Drehachse in der ersten Position und in der zweiten Position verrastbar ist und/oder dass das Beschlagteil mittels einer Federeinrichtung in Richtung zur zweiten Position hin vorgespannt ist. Hierdurch ist es in einfacher und dennoch robuster und gewichtsmäßig vorteilhafter Weise möglich, zu jeder Zeit eine definierte Einstellung des Fahrzeugsitzes und seiner Komponenten, insbesondere des Lehnenteils zusammen mit dem Beschlagteil, zu erzielen, so dass sogenannte Misuse-Situation (d.h. Situationen, die durch eine absichtliche oder unabsichtliche Fehlbedienung seitens des Fahrzeugsitzbenutzers herbeigeführt werden) vermieden oder zumindest reduziert werden.

Erfindungsgemäß ist es ferner bevorzugt, dass die Relativposition des Lehnenteils zum Beschlagteil bei der Schwenkung um die erste Drehachse im wesentlichen unverändert vorgesehen ist, dass das Lehnenteil in der ersten Position des Beschlagteils um die erste Drehachse im wesentlichen in einer Komfortneigungseinstellung eingestellt vorgesehen ist und dass das Lehnenteil in der zweiten Position des Beschlagteils um die erste Drehachse im wesentlichen senkrecht eingestellt vorgesehen ist, wobei die Komfortneigungseinstellung insbesondere einer Einstellung von ca. 20° bis 40° bevorzugt von ca. 25° bis ca. 35° aus der Senkrechten weg entspricht. Hierdurch kann in vorteilhafter Weise ebenfalls eine einfache, leichte und dennoch robuste Ausführung der Verschwenkungsfunktionalität des Lehnenteils des Fahrzeugsitzes erzielt werden und weiterhin auch die Wahrscheinlichkeit einer sogenannten Misuse-Situation reduziert werden.

Erfindungsgemäß ist es weiterhin auch bevorzugt, dass die Dreheinstellung des Lehnenteils relativ zur Karosserie bei der Schwenkung des Beschlagteils um die erste Drehachse im wesentlichen unverändert vorgesehen ist, dass das Lehnenteil in der ersten Position und in der zweiten Position des Beschlagteils um die erste Drehachse im wesentlichen in einer Komfortneigungseinstellung eingestellt vorgesehen ist, wobei die Komfortneigungseinstellung insbesondere einer Einstellung von ca. 20° bis 40° bevorzugt von ca. 25° bis ca. 35° aus der Senkrechten weg entspricht. Hierdurch kann in vorteilhafter Weise ebenfalls eine einfache, leichte und dennoch robuste Ausführung der Verschwenkungsfunktionalität des Lehnenteils des Fahrzeugsitzes erzielt werden, wobei sowohl in der ersten Position als auch in der zweiten Position eine normale Sitzbenutzung möglich ist, wobei in der zweiten Position des Lehnenteils die Laderaumvergrößerung zu einer gewissen Verkleinerung der Sitzfläche auf dem Sitzteil führt, was jedoch insbesondere für kleinere Personen, etwa Kinder, oder auch für besondere Benutzungssituationen, etwa eine Belegung mit einem Kindersitz oder einer Babyschale, nicht nachteilig sein muss. Auf diese Weise wird eine Erhöhung der Anzahl der Varianten von Benutzungsmöglichkeiten des erfindungsgemäßen Fahrzeugsitzes bzw. des Fahrzeugs mit einem erfindungsgemäßen Fahrzeugsitz möglich, so dass insgesamt der Gebrauchsnutzen für einen Benutzer erhöht wird.

Erfindungsgemäß ist es ferner bevorzugt, dass bei der Schwenkung des Beschlagteils um die erste Drehachse eine Änderung der Dreheinstellung des Lehnenteils relativ zur Karosserie um einen Winkel im Bereich von etwa 1° bis etwa 140° vorgesehen ist, bevorzugt entweder um einen Winkel im Bereich von 3° bis etwa 30° oder um einen Winkel im Bereich von etwa 110° bis etwa 140°, wobei das Lehnenteil in der ersten Position des Beschlagteils um die erste Drehachse im wesentlichen in einer Komfortneigungseinstellung eingestellt vorgesehen ist, wobei die Komfortneigungseinstellung insbesondere einer Einstellung von ca. 20° bis 40° bevorzugt von ca. 25° bis ca. 35° aus der Senkrechten weg entspricht. Hierdurch können in vorteilhafter Weise auch gegenüber der Komfortneigungseinstellung andere Einstellungen des Lehnenteils vorgesehen sein, die der zweiten Position des Beschlagteils entsprechen. In diesem Fall ist ein Viergelenk zwischen dem Beschlagteil und einem Teil des Neigungsverstellbeschlags vorgesehen, wobei das Viergelenk nicht als Parallelogramm ausgebildet ist.

Ferner ist es erfindungsgemäß weiterhin von Vorteil, wenn das Beschlagteil zusammen mit einem Schwenkhebel und einem Teil des Neigungsverstellbeschlags ein Viergelenk bildet, wobei das Viergelenk insbesondere mittels einer ersten und einer zweiten Ver- und Entriegelungseinrichtung sperrbar ist, insbesondere in der ersten und der zweiten Position des Beschlagteils, wobei insbesondere ferner vorgesehen ist, dass das Viergelenk im wesentlichen als Parallelogramm ausgebildet ist, so dass es zu einer drehlagenkonstanten (bzw. dreheinstellungskonstanten) Verschwenkung des Lehnenteils relativ zur Karosserie im Falle einer Verschwenkung des Beschlagteils um die erste Drehachse kommt. Hierdurch ist es in besonders vorteilhafter Weise möglich, dass eine einfache, leichte und dennoch robuste Ausführung der Verschwenkungsfunktionalität des Beschlagteils bei konstanter Drehlage des Lehnenteils des Fahrzeugsitzes erzielt werden kann und weiterhin auch die Wahrscheinlichkeit einer sogenannten Misuse-Situation reduziert werden kann, weil insbesondere keine Entriegelung des Neigungsverstellbeschlags zwischen dem Beschlagteil und dem Lehnenteil erforderlich ist.

Ferner ist es erfindungsgemäß bevorzugt, dass die Dreheinstellung des Lehnenteils relativ zum Beschlagteil um die zweite Drehachse in der Normalposition in einem Komforteinstellungsbereich entweder kontinuierlich in unterschiedliche Positionen einstellbar ist oder dass in eine Mehrzahl von Positionen einstellbar ist. Hierdurch kann in vorteilhafter Weise eine besonders auf die Komfortbedürfnisse eines Benutzers abgestellte Benutzung des Fahrzeugsitzes ermöglicht werden. Besonders bevorzugt ist, dass das Sitzteil relativ zur Fahrzeugkarosserie feststehend angeordnet ist. Hierdurch kann erfindungsgemäß eine besonders leichte und dennoch stabile Konstruktion des Fahrzeugsitzes erzielt werden und dennoch eine enorme Flexibilität hinsichtlich Komfortgesichtspunkten und hinsichtlich einer Laderaumvergrößerung erzielt werden. Mit einem gegenüber der Fahrzeugkarosserie feststehenden Sitzteil ist hierbei im Sinne der vorliegenden Erfindung gemeint, dass zumindest die Hauptstrukturteile des Sitzteils gegenüber der Fahrzeugkarosserie feststehend ausgebildet sind. Hingegen können beispielsweise Polsterteile des Sitzteils entweder entnehmbar oder auch gegenüber der Fahrzeugkarosserie beweglich angeordnet sein.

Im folgenden wird unter Bezugnahme auf die beigefügten Zeichnungen ein Ausführungsbeispiel der Erfindung etwas näher erläutert.
- Figuren 1 und 2: zeigen eine erste Ausführungsform eines erfindungsgemäßen Fahrzeugsitzes in seitlicher schematischer Darstellung in zwei unterschiedlichen Positionen.
- Figur 3: zeigt eine Neigungsverstellvorrichtung für einen Fahrzeugsitz gemäß der ersten Ausführungsform in einer perspektivischen, schematischen Darstellung.
- Figur 4: zeigt eine Gelenkeinrichtung für einen Fahrzeugsitz gemäß der ersten Ausführungsform mit entfernter äußerer Flankenplatine in schematischer Darstellung.
- Figuren 5 bis 10: zeigen eine Gelenkeinrichtung für einen Fahrzeugsitz gemäß einer zweiten Ausführungsform in verschiedenen Einstellpositionen und Seiten.

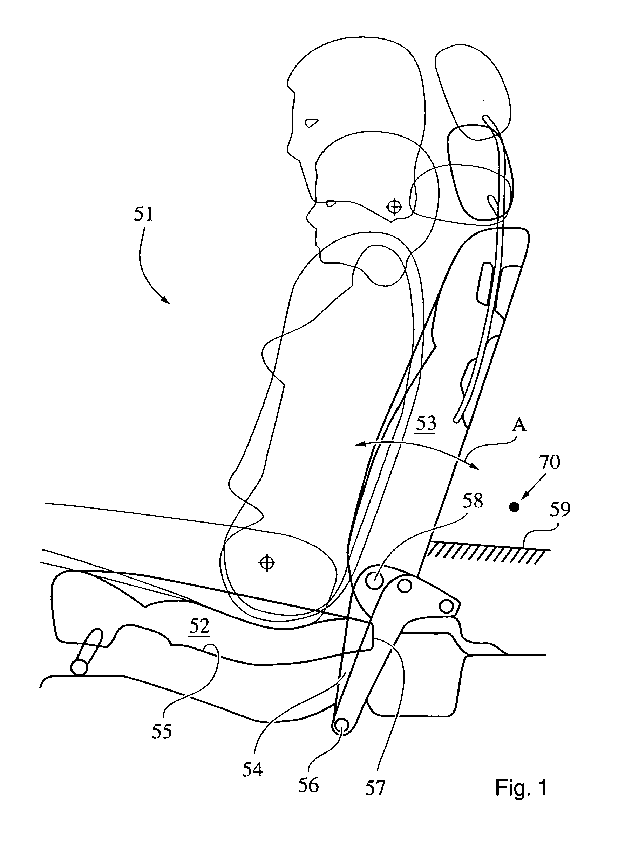

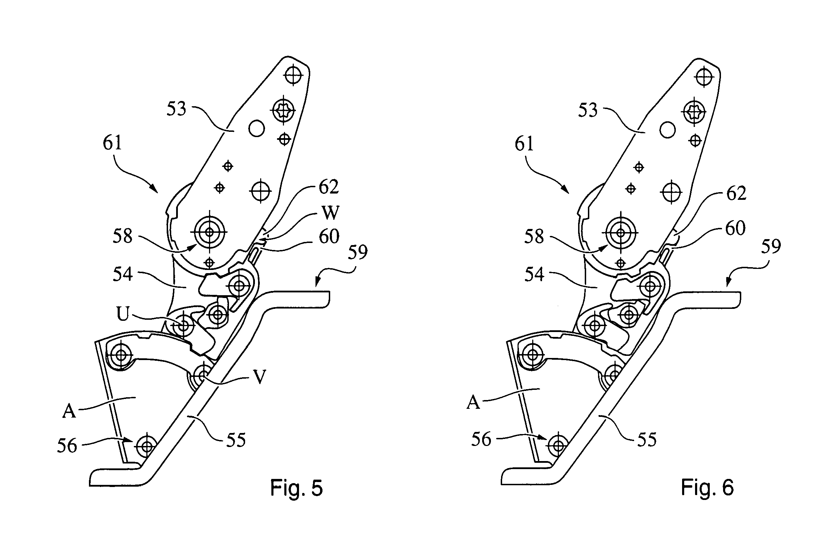

Der in Figur 1 in Gebrauchsstellung gezeigte Fahrzeugsitz 51 gemäß einer ersten Ausführungsform der vorliegenden Erfindung umfasst ein karosseriefestes Sitzteil 52 und eine Rückenlehne 53 bzw. ein Lehnenteil 53. Die Rückenlehne 53 bzw. das Lehnenteil 53 ist über ein Beschlagteil 54 (welches nachfolgend auch als Gelenkeinrichtung 54 bezeichnet wird) mit dem Fahrzeugboden 55 bzw. mit der Karosserie 55 verbunden. Das Beschlagteil 54 weist eine erste Drehachse 56 am Fahrzeugboden (bzw. relativ zum Fahrzeugboden 55 oder relativ zur Karosserie 55) unterhalb des Sitzteils 52 auf. Diese ist gegenüber der Oberkante der Rückenlehne 53 nach vorne, also in Fahrtrichtung (X-Richtung eines üblichen Kraftfahrzeugkoordinatensystems) verschoben angeordnet. Dies gilt gleichfalls für die zweite Ausführungsform des Fahrzeugsitzes 51, die im wesentlichen anhand des Beschlagteils 54 in den Figuren 5 bis 10 dargestellt ist.

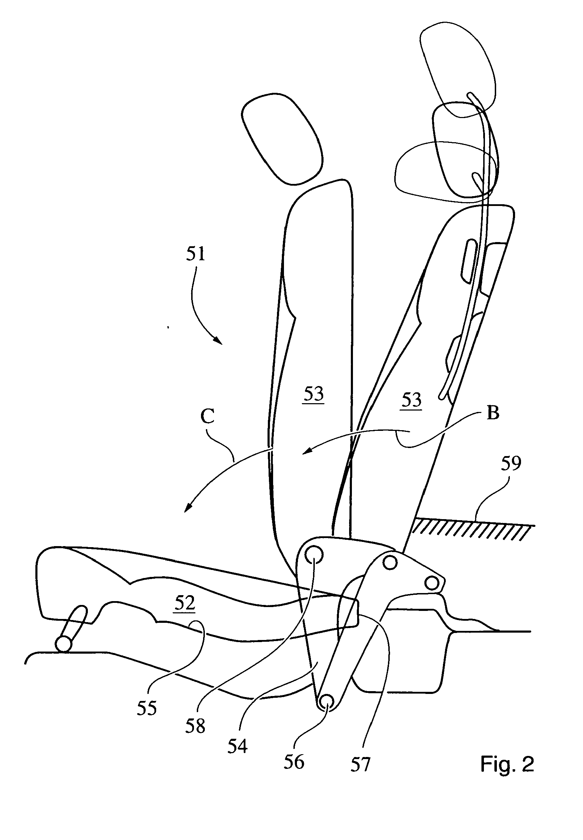

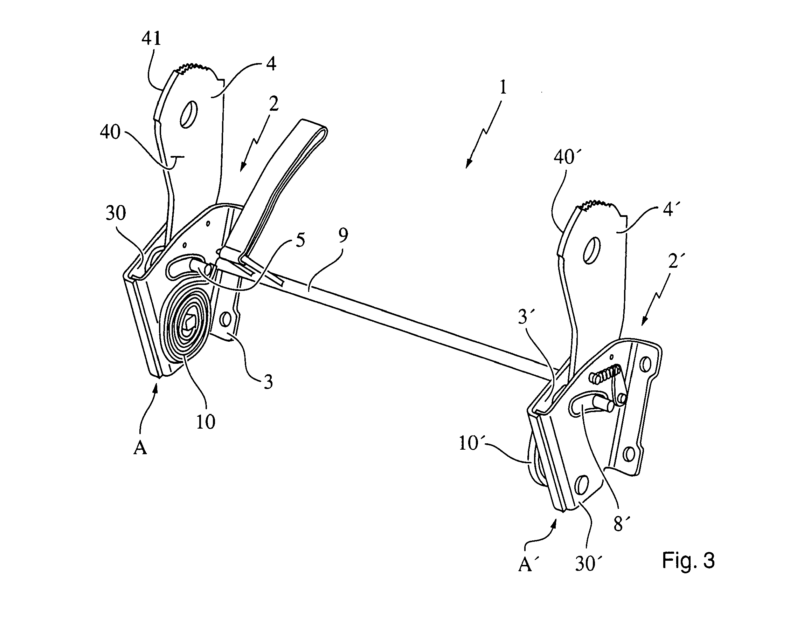

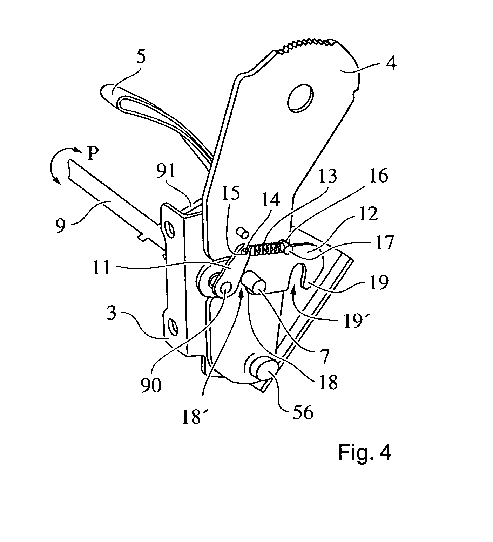

Nach dem Lösen einer in den Figuren 1 und 2 nicht dargestellten, jedoch in den Figuren 3 und 4 näher ausgeführten Verriegelung kann die Rückenlehne 53 bei der in Figur 1 und 2 gezeigten ersten Ausführungsform gemeinsam mit dem Beschlagteil 54 (d.h. die Rückenlehne 53 ist relativ zum Beschlagteil 54 während der Verschwenkung drehfest verbunden und behält relativ zum Beschlagteil 54 ihre Drehlage bzw. Dreheinstellung bei) aus ihrer nach hinten geneigten Designstellung (nachfolgend auch als erste Position des Beschlagteils 54 bzw. der Rückenlehne 53 bezeichnet) in Fahrtrichtung in eine leicht nach vorne geneigte und in Figur 2 dargestellten ersten Ladestellung (nachfolgend auch als zweite Position des Beschlagteils 54 bzw. der Rückenlehne 53 bezeichnet) geschwenkt werden (Pfeil B). Die Rückenlehne 53 wird durch die Anordnung der ersten Drehachse 56 im ersten Bereich dieser Schwenkbewegung nicht nur in X-Richtung verlagert, sondern gleichzeitig auch angehoben (Verlagerung in Z-Richtung). Durch diese Aufwärtsbewegung wird eine Kollision mit der Hinterkante 57 des Sitzteils 52 vermieden. Dies gilt sowohl für die erste als auch für die zweite Ausführungsform des Fahrzeugsitzes 51.

Ferner gilt sowohl für die erste als auch für die zweite Ausführungsform des Fahrzeugsitzes 51, dass das Beschlagteil 54 ferner eine zweite Drehachse 58 mit der Rückenlehne 53 aufweist, welche gegenüber der ersten Drehachse 56 vom Fahrzeugboden weg beabstandet ist. Die zweite - insbesondere über einen nicht im Detail dargestellten Neigungsverstellbeschlag - gleichfalls feststellbare Drehachse 58 dient zum Einstellen verschiedener Lehnenneigungs-Komfortpositionen (Pfeil A in Figur 1) und/oder dem Vorklappen der Rückenlehne 53, insbesondere von der ersten Ladestellung (Pfeil C in Figur 2, nachfolgend auch als dritte Position des Fahrzeugsitzes bzw. des Lehnenteils 53 relativ zum Beschlagteil 54 bezeichnet) in eine im wesentlichen horizontale Einstellung der Rückenlehne 53 (nachfolgend auch als vierte Position des Fahrzeugsitzes bzw. des Lehnenteils 53 relativ zum Beschlagteil 54 bezeichnet). Aus dieser vierten Position oder Stellung kann die Rückenlehne 53 gegebenenfalls (und insbesondere bei der zweiten Ausführungsform) im Wesentlichen parallel durch Drehen des Beschlagteils 54 in beiden Drehachsen 56, 58 wieder ein wenig nach hinten verlagert werden, um einen möglichen Spalt zum dahinter liegenden Ladeboden 59 des Fahrzeugs zu schließen.

Figur 3 zeigt eine Neigungsverstellvorrichtung 1 für einen erfindungsgemäßen Kraftfahrzeugsitz 51 (beispielsweise gemäß den Figuren 1 und 2) gemäß der ersten Ausführungsform in einer bevorzugten Ausführungsvariante. Mittels der Neigungsverstellvorrichtung 1 lässt sich die Neigung der Rückenlehne 53 relativ zum Sitzteil 52 bzw. relativ zur Karosserie 55 verstellen. Die Neigungsverstellvorrichtung 1 umfasst eine linke Gelenkeinrichtung 2 und eine rechte Gelenkeinrichtung 2'. Die beiden Gelenkeinrichtungen 2, 2' stimmen dem Grundaufbau und der prinzipiellen Funktionsweise nach miteinander überein. Jede Gelenkeinrichtung 2, 2' umfasst ein starr mit dem Sitzteil 52 bzw. mit der Karosserie 55 verbundenes Anschlussteil A, A' und ein starr - oder über einen ver- und entriegelbaren Neigungsverstellbeschlag, jedoch bei der Verschwenkung um die erste Drehachse 56 verriegelten Neigungsverstellbeschlag - mit der Rückenlehne 53 und gelenkig mit dem Anschlussteil A, A' verbundenes Beschlagteil 54, 54'.

Die beiden Anschlussteile A, A' umfassen jeweils eine einerseits des Beschlagteils 54, 54' angeordnete innere Flankenplatine 3, 3' und eine andererseits des Beschlagtells 54, 54' angeordnete äußere Flankenplatine 30, 30'. Die innere Flankenplatine 3, 3' und die äußeren Flankenplatinen 30, 30' jedes Anschlussteils A, A' begrenzen in den beiden seitlichen Richtungen einen Aufnahmeraum, in dem ein unterer Abschnitt der Beschlagteile 54, 54' angeordnet ist. Hierdurch wird ein maximaler Schwenkwinkel des Beschlagteils 54, 54' von beispielsweise bis zu 30° oder von beispielsweise bis zu 25° oder von beispielsweise bis zu 20° definiert. Von den einander zugewandten Innenseiten 40, 40' der Beschlagteile 54, 54' steht jeweils ein innerer Führungsbolzen 5 (von denen in Figur 3 nur der linke innere Führungsbolzen zu sehen ist) ab, die je eine kreisbogenförmige an jeder inneren Flankenplatine 3, 3' vorgesehene innere Führungskulisse 6 (von denen in Figur 3 nur die linke innere Führungskulisse zu sehen ist) durchragen. Entsprechend stehen von den nach außen weisenden Außenseiten 41, 41' der Beschlagteile 54, 54' jeweils ein äußerer Führungsbolzen 7, 7' (von denen in Figur 3 nur der rechte äußere Führungsbolzen zu sehen ist) ab, die je eine kreisbogenförmige an jeder äußeren Flankenplatine 30, 30' vorgesehene äußere Führungskulisse 8' durchragen.

Zwischen den beiden Beschlagteilen 54, 54' erstreckt sich eine längliche, rohrförmige Verbindungsstrebe 9. Die jeweils mit einem äußeren Ansatz gegen je einen der inneren Führungsbolzen 5, 5' drückenden Spiralfedern 10, 10' (nachfolgend auch als Federeinrichtung 10, 10' bezeichnet) üben auf die Beschlagteil 54, 54' eine Kraft aus, die das Bestreben hat, letztlich die Rückenlehne 53 nach vorne zu stellen und damit die Neigungsbewegung der Rückenlehne 53 nach vorne unterstützt.

Figur 4 zeigt in einer perspektivischen Darstellung die linke Gelenkeinrichtung 2 gemäß der Figur 3 mit entfernter linker äußerer Flankenplatine 30. Die Verbindungsstrebe 9 durchragt mit einem äußeren Abschnitt 90 die linke innere Flankenplatine 3. An ihrem freien Ende ist die Verbindungsstrebe 9 mit einer Gelenklasche 11 drehfest verbunden. Ein Riegelorgan 12 ist um die Längsachse der Verbindungsstrebe 9 schwenkbar gelenkig mit der Verbindungsstrebe 9 verbunden. Durch die Verbindung über die Verbindungsstrebe 9 ist die linke Gelenkeinrichtung 2 mit der rechten Gelenkeinrichtung 2' verbunden und es ist möglich, dass eine Entriegelung des Beschlagteils 54, 54' um die erste Drehachse für beide Seiten gleichzeitig über eine Betätigung (im vorliegenden Fall eine Drehung) der Verbindungsstrebe 9 im Sinne einer Entriegelung des Riegelorgans 12 erfolgt.

Eine Zugfeder 13 durchgreift mit einer ersten Federöse 14 eine runde Öffnung 15 im Bereich des freien Endes der Gelenklasche 11. Die zweite Federöse 16 der Zugfeder 13 umfasst einen von der nach Außen weisenden Außenfläche des Riegelorgans 12 abstehenden Anschlusszapfen 17. Am Riegelorgan 12 ist ein hinterer Fixierhaken 18 in Form einer das Riegelorgan 12 durchstoßenden, nach hinten geöffneten hinteren Hakenausnehmung 18' vorgesehen, die vom linken äußeren Führungsbolzen 7 durchragt wird. Der hintere Fixierhaken 18 legt den linken äußeren Führungsbolzen 7 und damit das linke Beschlagteil 54 in der in Figur 4 gezeigten Position fest, so dass letztlich die Rückenlehne in einer aufrechten hinteren Position arretiert wird.

Die Verbindungsstrebe 9 kann durch Ziehen an der über eine Halterung 91 mit der Verbindungstrebe 9 verbundenen Schlaufe S in durch den Drehpfeil P angedeutete Drehungen um ihre Längsachse versetzt werden. Die sich mit der Verbindungsstrebe 9 drehende Gelenklasche 11 nimmt über die Zugfeder 13 das Riegelorgan 12 mit, so dass letztlich die Drehbewegung der Verbindungsstrebe 9,eine Drehbewegung des Riegelorgans 12 bewirkt. Bei der Drehung des Riegelorgans 12 entgegen dem Uhrzeigersinn wird die linke hintere Hakenausnehmung 18' vom linken äußeren Führungsbolzen 7 wegbewegt, so dass der linke äußere Führungsbolzen 7 und die linke' hintere Hakenausnehmung 18' außer Eingriff geraten und folglich die Arretierung zwischen äußerem Führungsbolzen 7 und hinterer Hakenausnehmung 1W gelöst wird: Das linke Beschlagteil 54 und damit die Rückenlehne 53 können nun um die erste Drehachse 56 relativ zum Sitzteil 52 verschwenkt werden. Bei einer bestimmten Neigungsposition kommt ein im, Bereich des freien Endes des Riegelorgans 12 vorgesehener linker vorderer Fixierhaken 19 in Gestalt einer das Regelorgan 12 durchstoßenden linken vorderen Fixierausnehmung 19' zunächst in den Bereich des linken äußeren Führungsbolzens 7. Unter Einfluss der am Riegelorgan 12 angreifenden Kraft von der Zugfeder 13 gelangt schließlich die linke vordere Fixierausnehmung 19' in Eingriff mit dem linken äußeren Führungsbolzen 7, so dass letztlich die Rückenlehne 53 in einer gering nach vorne geneigten Stellung arretiert wird.

Bei einer zweiten Ausführungsform des erfindungsgemäßen Fahrzeugsitzes 51 ist es vorgesehen, dass bei der Drehung des Beschlagteils 54, 54' um die erste Drehachse 56 eine gleichzeitige Drehung des Lehnenteils 53 relativ zum Beschlagteil 54, 54' erfolgt, insbesondere derart, dass die Dreheinstellung des Lehnenteils 53 relativ zur Karosserie bzw. relativ zum Sitzteil 52 im wesentlichen unverändert vorgesehen ist und lediglich eine (nichtrotatorische) Schwenkung des Lehnenteils 53 erfolgt. Hierzu kann es beispielsweise vorgesehen sein, dass ein Neigungsverstellbeschlag 61 zwischen dem Lehnenteil 53 und dem Beschlagteil 54, 54' geöffnet wird (nicht dargestellt). Es ist erfindungsgemäß jedoch auch möglich und in den Figuren 5 bis 10 dargestellt, dass die Drehung des Lehnenteils 53 relativ zum Beschlagteil 54, 54' über ein Viergelenkmechanismus unter Zuhilfenahme eines Schwenkhebels 60 erfolgt. Hierbei bilden der Schwenkhebel 60 und das Beschlagteil 54, 54' zwei im wesentlichen parallele (und nicht direkt miteinander verbundene) Hebel des Viergelenkmechanismus. Das karosseriefeste bzw. sitzteilfeste Anschlussteil A, A' und ein beschlagteilseitiges Adapterteil 62 des Neigungsverstellbeschlags 61 bilden ebenfalls zwei im wesentlichen parallele (und nicht direkt miteinander verbundene) Hebel des Viergelenkmechanismus. Die außer der ersten Drehachse 56 weiteren Gelenkpunkte des Viergelenkmechanismus sind in Figur 5 mit den Buchstaben u, v und w bezeichnet. Es kann erfindungsgemäß bei der zweiten Ausführungsform durch eine Veränderung der Hebellängen des Viergelenkmechanismus auch vorgesehen sein, dass sich die Drehlage des Lehnenteils 53 relativ zum Beschlagteil 54, 54' bei einer Drehung bzw. Schwenkung um die erste Drehachse 56 ändert.

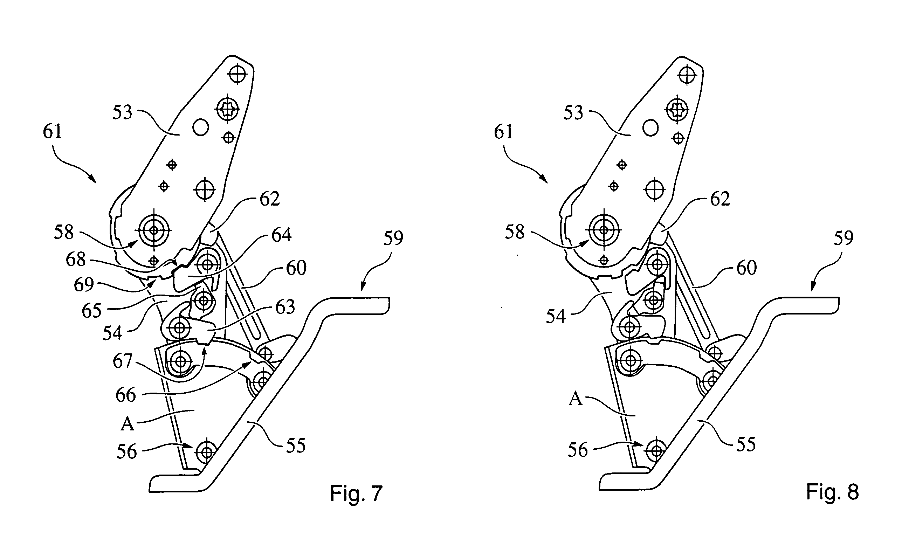

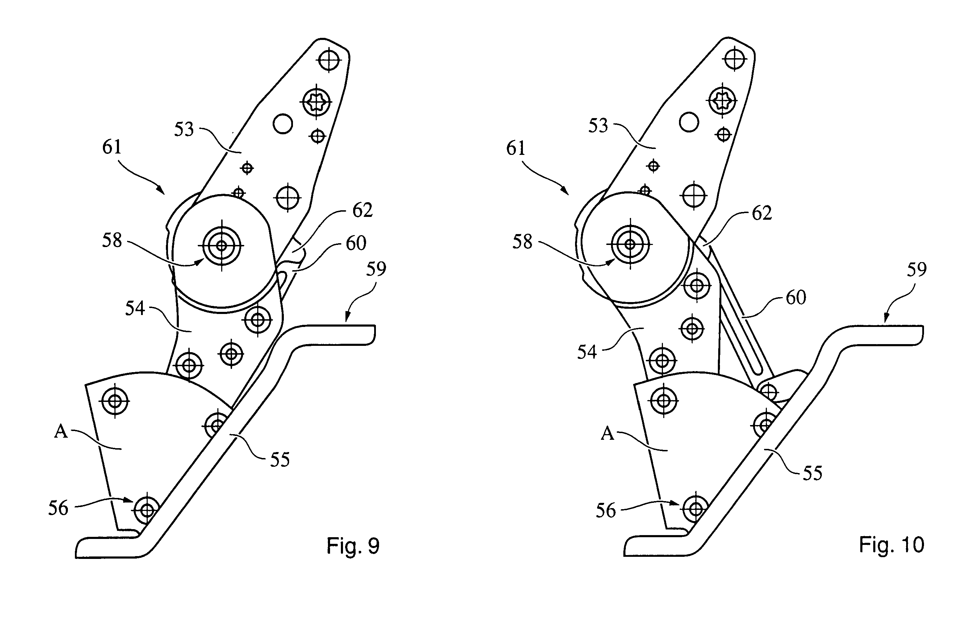

In den Figuren 5 bis 10 sind verschiedene Positionen der Gelenkeinrichtung für den erfindungsgemäßen Fahrzeugsitz 51 gemäß einer zweiten Ausführungsform dargestellt. Hierbei zeigen die Figuren 5, 6 und 9 die Einstellung des Beschlagteils 54, 54' gemäß der ersten Position und die Figuren 7, 8 und 10 die Einstellung des Beschlagteils 54, 54' gemäß der zweiten Position, wobei die Figuren 5 bis 8 jeweils beispielsweise eine Innenansicht der Gelenkeinrichtung und die Figuren 9 und 10 jeweils eine Außenansicht der Gelenkeinrichtung (oder umgekehrt) zeigen.

Der Unterschied zwischen den Figuren 5 und 6 bzw. 7 und 8 besteht darin, dass sich der Verriegelungszustand einer Verriegelungseinrichtung zur Arretierung der Schwenkstellung des Beschlagteils 54 um die erste Drehachse 56 unterscheidet. In Figur 5 und 7 ist die Verriegelungseinrichtung (jeweils in unterschiedlichen Positionen) verriegelt. In Figur 6 und 8 ist die Verriegelungseinrichtung entriegelt. Hierzu ist am Beschlagteil 54 gemäß der zweiten Ausführungsform (jedoch lediglich in Figur 7 dargestellt) eine erste Sperrklinke 63 und eine zweite Sperrklinke 64 sowie ein Sperrnocken 65 vorgesehen. An dem Anschlussteil A ist eine erste Rastausnehmung 66 und eine zweite Rastausnehmung 67 vorgesehen. An dem Adapterteil 62 ist eine dritte Rastausnehmung 68 und eine vierte Rastausnehmung 69 vorgesehen. In der ersten Position des Beschlagteils 54 (Figur 5) greift die erste Sperrklinke 63 in die erste Rastausnehmung 66 und die zweite Sperrklinke 64 in die dritte Rastausnehmung 68. In der zweiten Position des Beschlagteils 54 (Figur 7) greift die erste Sperrklinke 63 in die zweite Rastausnehmung 67 und die zweite Sperrklinke 64in die vierte Rastausnehmung 69. Der Sperrnocken 65 ist in seiner verriegelnden Drehstellung. In den Figuren 6 und 8 ist der Sperrnocken 65 gedreht (in seiner entriegelnden Drehstellung) und entriegelt die erste Sperrklinke 63 und die zweite Sperrklinke 64. Eine der Verbindungsstrebe 9 bei der ersten Ausführungsform entsprechende Einrichtung zum beidseitigen (und damit einhändigen) Betätigen der Verriegelungseinrichtung kann erfindungsgemäß auch bei der zweiten Ausführungsform vorgesehen sein (nicht dargestellt).

Bei einer alternativen Ausführungsform der vorliegenden Erfindung ist die erste Drehachse 56 hinter dem Lehnenteil 53 angeordnet, beispielsweise im Vergleich zum unteren Ende des Lehnenteils 53 in einer Richtung nach schräg hinten oben angeordnet, wie dies in der Figur 1 etwa mit dem Bezugszeichen 70 schematisch angedeutet ist. In diesem Fall dreht sich das Beschlagteil 54 gegenüber der ersten bzw. zweiten Ausführungsform um die erste Drehachse 56 in umgekehrter Richtung. Ein Viergelenkmechanismus ist in dieser Ausführungsform zwingend zwischen dem Beschlagteil 54 und dem Lehnenteil 53 vorgesehen.

### Bezugszeichenliste

- 1: Neigungsverstellvorrichtung
- 2, 2': Gelenkeinrichtung
- 3, 3': innere Flankenplatine
- 5, 5': innerer Führungsbolzen
- 6, 6': innere Führungskulisse
- 7, 7': äußerer Führungsbolzen
- 8, 8': äußere Führungskulisse
- 9: Verbindungsstrebe
- 10, 10': Spiralfeder
- 11: Gelenklasche
- 12': Riegelorgan
- 13: Zugfeder
- 14: erste Federöse
- 15: Öffnung
- 16: zweite Federöse
- 17: Anschlusszapfen
- 18: hinterer Fixierhaken
- 18': hintere Fixierausnehmung
- 19: vorderer Fixierhaken
- 19': vordere Fixierausnehmung
- 30, 30': äußere Flankenplatine
- 40.40': Innenseiten der Beschlagteile
- 41, 41': Außenseiten der Beschlagteile
- 51: Fahrzeugsitz
- 52: Sitzteil
- 53: Rückenlehneb / Lehnenteil
- 54, 54': Beschlagteil
- 55: Fahrzeugboden
- 56: erste Drehachse (Beschlagteil/Fahrzeugboden)
- 57: Hinterkante (des Sitzteils)
- 58: zweite Drehachse (Beschlagteil/Rückenlehne)
- 59: Ladeboden
- 60: Schwenkhebel
- 61: Neigungsverstellbeschlag
- 62: Adapterteil
- 63: erste Sperrklinke
- 64: zweite Sperrklinke
- 65: Sperrnocke
- 66: erste Rastausnehmung
- 67: zweite Rastausnehmung
- 68: dritte Rastausnehmung
- 69: vierte Rastausnehmung
- 90: äußerer Abschnitt der Verbindungsstrebe
- 91: Halterung
- A, A': Anschlußteile
- P: Drehpfeil
- S: Schlaufe

## Patentansprüche

1. Fahrzeugsitz (51) mit einem Sitzteil (52), einem Lehnenteil (53) und einem Beschlagteil (54, 54'), insbesondere Rücksitzbank, wobei das Lehnenteil (53) und das Beschlagteil (54, 54') relativ zur Fahrzeugkarosserie um eine erste Drehachse (56) schwenkbar vorgesehen ist, wobei die erste Drehachse (56) unterhalb des Sitzteils (52) oder hinter dem Lehnenteil (53) angeordnet ist, wobei bei der Drehung des Beschlagteils (54, 54') um die erste Drehachse (56) eine gleichzeitige Drehung des Lehnenteils (53) relativ zum Beschlagteil (54, 54') vorgesehen ist, wobei die Dreheinstellung des Lehnenteils (53) relativ zum Sitzteil (52) im Wesentlichen unverändert vorgesehen ist, **dadurch gekennzeichnet, dass** das Lehnenteil (53) relativ zum Beschlagteil (54, 54') um eine zweite Drehachse (58) schwenkbar vorgesehen ist, wobei die Dreheinstellung des Lehnenteils (53) relativ zum Beschlagteil (54, 54') um die zweite Drehachse (56) in einer dritten Position und in einer vierten Position vorgesehen ist, wobei die dritte Position einer Normalposition entspricht und wobei die vierte Position einer Klappposition entspricht, wobei das Lehnenteil (53) im Wesentlichen parallel durch Drehen des Beschlagteils (54, 54') in beiden Drehachsen (56, 58) wieder ein wenig nach hinten verlagert werden kann, um einen möglichen Spalt zum dahinter liegenden Ladeboden (59) des Fahrzeugs zu schließen.

2. Fahrzeugsitz (51) nach Anspruch 1, **dadurch gekennzeichnet, dass** insbesondere zwischen dem Beschlagteil (54, 54') und dem Lehnenteil (53) ein Neigungsverstellbeschlag vorgesehen ist, insbesondere ein Taumelverstellbeschlag und/oder ein Rastverstellbeschlag.

3. Fahrzeugsitz (51) nach einem der vorhergehenden Ansprüche, **dadurch gekennzeichnet, dass** die zweite Drehachse (58) oberhalb der ersten Drehachse (56) angeordnet ist, insbesondere im Bereich der Sitzebene oder der Verlängerung der Sitzebene des Sitzteils (52) oder oberhalb der Sitzebene oder der Verlängerung der Sitzebene des Sitzteils (52).

4. Fahrzeugsitz (51) nach einem der vorhergehenden Ansprüche, **dadurch gekennzeichnet, dass** eine Dreheinstellung des Beschlagteils (54, 54') um die erste Drehachse (56) in einer ersten Position und in einer zweiten Position relativ zur Fahrzeugkarosserie vorgesehen ist, wobei die erste Position einer Komfortposition entspricht und wobei die zweite Position einer Ladeposition entspricht.

5. Fahrzeugsitz (51) nach Anspruch 4 **dadurch gekennzeichnet, dass** die Dreheinstellung des Beschlagteils (54, 54') um die erste Drehachse (56) in der ersten Position und in der zweiten Position verrastbar ist und/oder dass das Beschlagteil (54, 54') mittels einer Federeinrichtung (10, 10') in Richtung zur zweiten Position hin vorgespannt ist.

6. Fahrzeugsitz (51) nach einem der vorhergehenden Ansprüche, **dadurch gekennzeichnet, dass** die Relativposition des Lehnenteils (53) zum Beschlagteil (54, 54') bei der Schwenkung um die erste Drehachse (56) im wesentlichen unverändert vorgesehen ist, dass das Lehnenteil (53) in der ersten Position des Beschlagteils (54, 54') um die erste Drehachse (56) im wesentlichen in einer Komfortneigungseinstellung eingestellt vorgesehen ist und dass das Lehnenteil (53) in der zweiten Position des Beschlagteils (54, 54') um die erste Drehachse (56) im wesentlichen senkrecht eingestellt vorgesehen ist, wobei die Komfortneigungseinstellung insbesondere einer Einstellung von ca. 20 deg. bis 40 deg. bevorzugt von ca. 25 deg. bis ca. 35 deg. aus der Senkrechten weg entspricht.

7. Fahrzeugsitz (51) nach einem der vorhergehenden Ansprüche, **dadurch gekennzeichnet, dass** die Dreheinstellung des Lehnenteils (53) relativ zur Karosserie bei der Schwenkung des Beschlagteils (54, 54') um die erste Drehachse (56) im wesentlichen unverändert vorgesehen ist, dass das Lehnenteil (53) in der ersten Position und in der zweiten Position des Beschlagteils (54, 54') um die erste Drehachse (56) im wesentlichen in einer Komfortneigungseinstellung eingestellt vorgesehen ist, wobei die Komfortneigungseinstellung insbesondere einer Einstellung von ca. 20 deg. bis 40 deg. bevorzugt von ca. 25 deg. bis ca. 35 deg. aus der Senkrechten weg entspricht.

8. Fahrzeugsitz (51) nach einem der vorhergehenden Ansprüche, **dadurch gekennzeichnet, dass** bei der Schwenkung des Beschlagteils (54, 54') um die erste Drehachse (56) eine Änderung der Dreheinstellung des Lehnenteils (53) relativ zur Karosserie um einen Winkel im Bereich von etwa 1 deg. bis etwa 140 deg. vorgesehen ist, bevorzugt entweder um einen Winkel im Bereich von 3 deg. bis etwa 30 deg. oder um einen Winkel im Bereich von etwa 110 deg. bis etwa 140 , wobei das Lehnenteil (53) in der ersten Position des Beschlagteils (54, 54') um die erste Drehachse (56) im wesentlichen in einer Komfortneigungseinstellung eingestellt vorgesehen ist, wobei die Komfortneigungseinstellung insbesondere einer Einstellung von ca. 20 deg. bis 40 deg. bevorzugt von ca. 25 deg. bis ca. 35 deg. aus der Senkrechten weg entspricht.

9. Fahrzeugsitz (51) nach einem der Ansprüche 2-8 **dadurch gekennzeichnet, dass** das Beschlagteil (54, 54') zusammen mit einem Schwenkhebel (60) und einem Teil des Neigungsverstellbeschlags ein Viergelenk bildet, wobei das Viergelenk insbesondere mittels einer ersten und einer zweiten Ver- und Entriegelungseinrichtung sperrbar ist, insbesonder in der ersten und zweiten Position des Beschlagteils (54, 54').

10. Fahrzeugsitz (51) nach einem der vorhergehenden Ansprüche, **dadurch gekennzeichnet, dass** die Dreheinstellung des Lehnenteils (53) relativ zum Beschlagteil (54, 54') um die zweite Drehachse (56) in der Normalposition in einem Komforteinstellungsbereich entweder kontinuierlich in unterschiedliche Positionen einstellbar ist oder dass in eine Mehrzahl von Positionen einstellbar ist.

11. Fahrzeugsitz (51) nach einem der vorhergehenden Ansprüche, **dadurch gekennzeichnet, dass** das Sitzteil (52) relativ zur Fahrzeugkarosserie feststehend angeordnet ist.

## Claims

1. A vehicle seat (51) with a seat section (52), a backrest (53) and a fitting (54, 54'), in particular a back seat, wherein the backrest (53) and the fitting (54, 54') in relation to the body of the vehicle is intended to be pivotable around a first rotational axis (56), wherein the first rotational axis (56) is arranged underneath the seat section (52) or behind the backrest (53), wherein, when the fitting (54, 54') is rotated around the first rotational axis (56), a simultaneous rotation of the backrest (53) in relation to the fitting (54, 54') is provided for, wherein the rotational setting of the backrest (53) in relation to the seat section (52) is designed to be largely unchanged, **characterised in that** the backrest (53) in relation to the fitting (54, 54') is intended to be pivotable around a second rotational axis (58), wherein the rotational setting of the backrest (53) in relation to the fitting (54, 54') around the second rotational axis (56) is provided for in a third position and a fourth position, wherein the third position corresponds to a normal position and wherein the fourth position corresponds to a folded position, wherein the backrest (53) can be shifted backwards again a little, essentially parallel, by turning the fitting (54, 54') around both rotational axes (56, 58), in order to close any gap to the loading floor (59) of the vehicle located behind it.

2. The vehicle seat (51) in accordance with Claim 1, **characterised in that** an inclination adjustment is provided for, in particular a tumbling adjustment and/or a catch adjustment, especially between the fitting (54, 54') and the backrest (53).

3. The vehicle seat (51) in accordance with one of the preceding claims, **characterised in that** the second rotational axis (58) is arranged above the first rotational axis (56), in particular in the region of the seating level or the extension of the seating level of the seat section (52) or above the seating level or the extension of the seating level of the seat section (52).

4. The vehicle seat (51) in accordance with one of the preceding claims, **characterised in that** a rotational setting of the fitting (54, 54') around the first rotational axis (56) in a first position and a second position in relation to the body of the vehicle is provided for, wherein the first position corresponds to a comfort position and wherein the second position corresponds to a loading position.

5. The vehicle seat (51) in accordance with Claim 4, **characterised in that** the rotational setting of the fitting (54, 54') around the first rotational axis (56) in the first position and the second position can be locked and/or that the fitting (54, 54') is pre-stressed by means of a spring device (10, 10') in the direction of the second position.

6. The vehicle seat (51) in accordance with one of the preceding claims, **characterised in that** the relative position of the backrest (53) in relation to the fitting (54, 54') is provided for essentially unchanged when the backrest (53) is swivelled around the first rotational axis (56), that the backrest (53) is designed to be essentially adjustable in a comfort inclination in the first position of the fitting (54, 54') around the first rotational axis (56) and that the backrest (53) is intended to be adjusted essentially perpendicular in the second position of the fitting (54, 54') around the first rotational axis (56), wherein the comfort inclination in particular conforms to a setting of approx. 20 - 40 degrees, preferably 25 - 35 degrees, away from the perpendicular position.

7. The vehicle seat (51) in accordance with one of the preceding claims, **characterised in that** the rotational setting of the backrest (53) in relation to the body of the vehicle when the fitting (54, 54') is swivelled around the first rotational axis (56) is designed to remain essentially unchanged, that the backrest (53) is designed to be essentially adjustable in a comfort inclination in the first position and the second position of the fitting (54, 54') around the first rotational axis (56) wherein the comfort inclination in particular conforms to a setting of approx. 20 - 40 degrees, preferably 25 - 35 degrees, away from the perpendicular position.

8. The vehicle seat (51) in accordance with one of the preceding claims, **characterised in that**, when the fitting (54, 54') swivels around the first rotational axis (56), a change in the rotational setting of the backrest (53) in relation to the body of the vehicle by an angle in the range of approx. 1 degree to approx. 140 degrees is provided for, preferably either through an angle in the range of 3 degrees to approx. 30 degrees or an angle in the range of approx. 110 degrees to approx 140 degrees is provided for, wherein the backrest (53) is intended to be adjusted in the first position of the fitting (54, 54') around the first rotational axis (56), essentially set in a comfort inclination, wherein the comfort inclination in particular conforms to a setting of approx. 20 - 40 degrees, preferably 25 - 35 degrees, away from the perpendicular position.

9. The vehicle seat (51) in accordance with one of claims 2-8, **characterised in that**, together with a swivel arm (60) and a part of the inclinating adjustment, the fitting (54, 54') forms a four-pivot system, wherein the four-pivot system can in particular be locked by means of a first and a second locking and unlocking device, in particular in the first and second positions of the fitting (54, 54').

10. The vehicle seat (51) in accordance with one of the preceding claims, **characterised in that** the rotational setting of the backrest (53) in relation to the fitting (54, 54') around the second rotational axis (56) in the normal position in a comfort setting range can either be continually adjusted into various different positions or can be set in a plurality of positions.

11. The vehicle seat (51) in accordance with one of the preceding claims, **characterised in that** the seat section (52) is arranged in a fixed position in relation to the body of the vehicle.

## Revendications

1. Siège de véhicule (51) composé d'une partie d'assise (52), d'une partie de dossier (53) et d'une pièce de ferrure (54, 54'), notamment une banquette arrière, la partie de dossier (53) et la pièce de ferrure (54, 54') sont prévues pivotantes autour d'un premier axe de rotation (56) par rapport à la carrosserie du véhicule, ledit premier axe de rotation (56) étant disposé en dessous de la partie d'assise (52) ou derrière la partie de dossier (53), une rotation simultanée de la partie de dossier (53) étant prévue autour du premier axe de rotation (56) par rapport à la pièce de ferrure (54, 54') lorsque ladite pièce de ferrure (54, 54') pivote, le réglage de la rotation de la partie de dossier (53) restant sensiblement inchangé par rapport à la partie d'assise (52), **caractérisé en ce que** la partie de dossier (53) est prévue pivotante autour d'un deuxième axe de rotation (58) par rapport à la pièce de ferrure (54, 54'), le réglage de la rotation de la partie de dossier (53) autour dudit deuxième axe de rotation (56) par rapport à la pièce de ferrure (54, 54') étant prévu dans une troisième position et dans une quatrième position, ladite troisième position correspondant à une position normale et ladite quatrième position correspondant à une position repliée, la partie de dossier (53) pouvant être redécalée légèrement vers l'arrière essentiellement parallèle en pivotant la pièce de ferrure (54, 54') dans les deux axes de rotation (56, 58) de manière à fermer un interstice possible par rapport au plancher du coffre (59) placé à l'arrière du véhicule.

2. Siège de véhicule (51) selon la revendication 1, **caractérisé en ce que** notamment une ferrure de réglage de l'inclinaison est prévue entre la pièce de ferrure (54, 54') et la partie de dossier (53), notamment une ferrure de réglage du mouvement giratoire et/ou une ferrure à encliquetage réglable.

3. Siège de véhicule (51) selon l'une des revendications précédentes, **caractérisé en ce que** le deuxième axe de rotation (58) est disposé en dessus du premier axe de rotation (56), notamment dans la zone du plan d'assise ou du prolongement du plan d'assise de la partie d'assise (52) ou en dessus du plan d'assise ou du prolongement du plan d'assise de la partie d'assise (52).

4. Siège de véhicule (51) selon l'une des revendications précédentes, **caractérisé en ce qu'**un réglage de la rotation de la pièce de ferrure (54, 54') est prévu autour du premier axe de rotation (56) dans une première position et une deuxième position par rapport à la carrosserie du véhicule, ladite première position correspondant à une position de confort et ladite deuxième position correspondant à une position de chargement.

5. Siège de véhicule (51) selon la revendication 4 **caractérisé en ce que** le réglage de la rotation de la pièce de ferrure (54, 54') peut être encliqueté dans la première position et deuxième position autour du premier axe de rotation (56) et/ou que la pièce de ferrure (54, 54') peut être précontrainte en direction de la deuxième position à l'aide d'un dispositif à ressort (10, 10').

6. Siège de véhicule (51) selon l'une des revendications précédentes, **caractérisé en ce que** la position relative de la partie de dossier (53) par rapport à la pièce de ferrure (54, 54') reste sensiblement inchangée lors du pivotement autour du premier axe de rotation (56), que la partie de dossier (53) est essentiellement prévue réglée en inclinaison en position confort dans la première position de la pièce de ferrure (54, 54') autour du premier axe de rotation (56) et que la partie de dossier (53) est prévue réglée essentiellement à la verticale dans la deuxième position de la pièce de ferrure (54, 54') autour du premier axe de rotation (56), le réglage de l'inclinaison en position confort correspondant notamment à un réglage de 20 deg. environ à 40 deg., de préférence de 25 deg. environ à 35 deg. environ à partir de la verticale.

7. Siège de véhicule (51) selon l'une des revendications précédentes, **caractérisé en ce que** le réglage de la rotation de la partie de dossier (53) par rapport à la carrosserie reste sensiblement inchangé autour du premier axe de rotation (56) lors du pivotement de la pièce de ferrure (54, 54'), que la partie de dossier (53) est essentiellement prévue réglée en inclinaison en position confort dans la première position et la deuxième position de la pièce de ferrure (54, 54') autour du premier axe de rotation (56), le réglage de l'inclinaison en position confort correspondant notamment à un réglage de 20 deg. environ à 40 deg., de préférence de 25 deg. environ à 35 deg. environ à partir de la verticale.

8. Siège de véhicule (51) selon l'une des revendications précédentes, **caractérisé en ce qu'**un changement du réglage de la rotation de la partie de dossier (53) par rapport à la carrosserie autour du premier axe de rotation (56) lors du pivotement de la pièce de ferrure (54, 54') est prévu selon un angle compris entre 1 deg. environ à 140 deg. environ, de préférence selon un angle compris entre 3 deg. à 30 deg. environ ou selon un angle compris entre 110 deg. environ à 140 deg. environ, la partie de dossier (53) étant essentiellement prévue réglée en inclinaison en position confort dans la première position de la pièce de ferrure (54, 54') autour du premier axe de rotation (56), le réglage de l'inclinaison en position confort correspondant notamment à un réglage de 20 deg. environ à 40 deg., de préférence de 25 deg. environ à 35 deg. environ à partir de la verticale.

9. Siège de véhicule (51) selon l'une des revendications 2 à 8, **caractérisé en ce que** la pièce de ferrure (54, 54') forme un quadrilatère articulé avec un levier pivotant (60) et une partie de la ferrure de réglage de l'inclinaison, ledit quadrilatère articulé pouvant être bloqué notamment à l'aide d'un premier et d'un deuxième dispositif de verrouillage et de déverrouillage, en particulier en première et deuxième position de la pièce de ferrure (54, 54').

10. Siège de véhicule (51) selon l'une des revendications précédentes, **caractérisé en ce que** le réglage de la rotation de la partie de dossier (53) autour du deuxième axe de rotation (56) par rapport à la pièce de ferrure (54, 54') en position normale dans une plage de réglage en position en position confort est réglable soit en continu dans différentes positions, soit dans une pluralité de positions.

11. Siège de véhicule (51) selon l'une des revendications précédentes, **caractérisé en ce que** la partie d'assise (52) est agencée de manière fixe par rapport à la carrosserie du véhicule.
